# EUROPEAN PATENT APPLICATION

(11) **EP 3 671 320 A1**
(43) Date of publication of application: **24.06.2020**
(21) Application number: 18215221.5
(22) Date of filing: 21.12.2018
(51) Int. Cl.: G02B 27/28, G02B 27/01

(54) **STRAY LIGHT RESISTANT AUGMENTED REALITY DEVICE**

(71) Applicant: Thomson Licensing, 35576 Cesson Sévigné Cédex (FR)
(72) Inventor: SHRAMKOVA, Oksana, 35576 CESSON-SEVIGNE (FR); DRAZIC, Valter, 35576 CESSON-SEVIGNE (FR); BLONDE, Laurent, 35576 CESSON-SEVIGNE (FR)
(74) Representative: Vidon Brevets & Stratégie

(57) **Abstract**

The disclosure relates to an optical device for delivering an image to an eye box (EB). Such optical device comprises:
- a light-engine for delivering the image, said light engine generating *n* different monochromatic light beams, whose combination corresponds to said image, with *n* ≥ 1;
- m waveguide elements (WG1, WG2, WG3), with 1 ≤ *m* ≤ *n*, each waveguide element being configured to guide at least one of said *n* monochromatic light beams to out-coupling diffractive means arranged within the waveguide element, the out-coupling diffractive means (OM1, OM2, OM3) being configured to deliver at least one part of the guided beams toward the eye box (EB).

According to the disclosure, the *n* monochromatic light beams are in a same polarization mode when guided within their respective waveguide elements, and the optical device further comprises at least one polarizer (Po) configured to filter said polarization mode from external light beams (EL), before said external light beams reach at least one of the out-coupling diffractive means.

## Description

### 1. Field of the disclosure

The present invention relates generally to the field of augmented reality glasses. More particularly, the present disclosure relates to an optical device using see-through waveguides to guide light beams forming an image to out-coupling diffractive means configured to direct said image toward the eye of a user wearing the optical device.

### 2. Background

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Augmented reality applications refer to a live view of a real-world environment whose elements are augmented by computer-generated content, such as video or graphics for example. An augmented reality device may notably take the form of glasses to be worn by a user, wherein the glasses comprises at least one light engine configured to generate an image (referred to as "virtual image" throughout the present disclosure), and wherein at least one glass plate comprises see-through waveguides configured to guide the virtual image to an eye of the user (two set of waveguide elements may also be used, one set per glass plates, so as to guide the virtual image both to the left and right eyes). The light engine may be arranged for example in the branches of the glasses, or on the top of the glass plates, just above the eye. In-coupling diffractive means and out-coupling diffractive means associated with each waveguide element are other important optical elements usually implemented in such an augmented reality device. Indeed, in-coupling diffractive means are used to inject the light beams forming the virtual image into the waveguide elements, where they are guided by total internal reflection up to the out-coupling diffractive means that are configured to extract the virtual image and direct it towards the eyes of the user wearing the glasses. In that way, the user can see the virtual image generated by the light engine superimposed on the view of the real-world elements seen through the glass plates. Out-coupling diffractive means generally take the form of a diffraction grating comprising straight periodic structures extending all in a vertical or horizontal direction, depending on the general design of the glasses and notably on the position of the light engine.

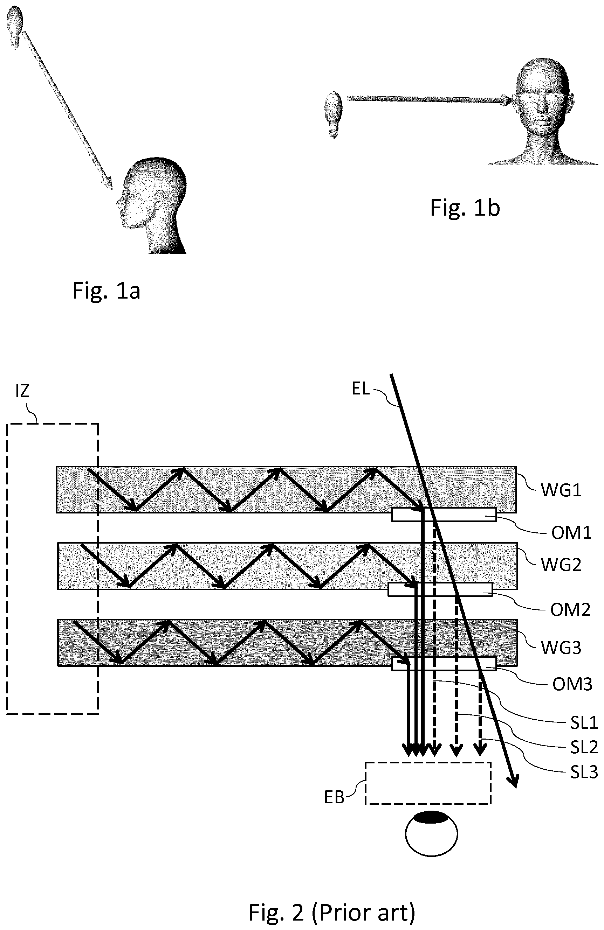

Because the waveguide elements are see-through elements (so as to allow the user wearing the glasses to see the real world environment), the light beams generated by the light engine are not the only ones to reach the out-coupling diffractive means: some external light beams incident on the glasses and coming from real-world light sources that are not embedded in the glasses also do. Under certain conditions that are frequently met, a part of these external light beams is diffracted towards the eyes of the user by the out-coupling diffractive means. This unwanted and uncontrolled diffraction stray light creates visual discomfort and compromises the quality of the user experience. This stray light may appear, for example, when the out-coupling diffractive means takes the form of diffractive gratings comprising periodic structures extending in the horizontal direction when the user wearing the augmented reality device stands straight, and when an external light source is located above the head of the user, as illustrated in relation with **figure 1a****.** One should notice that such a situation is frequently encountered, whether the augmented reality device is used indoors (with some kind of lighting hanging on the ceiling) or outdoors (with the sun above the user head). In such cases, the light shining onto the out-coupling diffractive means from the above is likely to be diffracted toward the eye, and superimposes on the real view and virtual image as a bright ghost diffracted light.

In a similar way, undesirable diffracted stray light may reach the user eye when the out-coupling diffractive means take the form of diffractive gratings comprising periodic structures extending in the vertical direction when the user wearing the augmented reality device stands straight, and when an external light source is located on a user side, as illustrated in relation with **figure 1b****.**

Because the out-coupling diffractive means are always in the field of view of the user wearing the augmented reality device, and because many external light sources are polychromatic light sources (like halogen light or sun light), thus increasing the probability that there exists some incident light beams having an incident angle and a wavelength verifying the grating equation when the angle of the diffracted beam with respect to the grating's normal is set to null, such situations where unwanted stray light reaches the eyes of the user occur very frequently.

It would hence be desirable to provide a technique that would avoid at least some of these drawbacks of the prior art, by allowing getting rid of a maximum amount of diffracted stray light originating from external light sources, and thus improve the user experience.

### 3. Summary

According to the present disclosure, an optical device for delivering an image to an eye box is disclosed, the eye box being an area positioned in front of an eye of a user wearing said optical device. Such an optical device comprises:
- a light-engine for delivering said image, said light engine being able to generate *n* different monochromatic light image beams, whose combination corresponds to said image, *n* being an integer greater or equal to one;
- *m* waveguide elements, *m* being an integer greater or equal to one and lower or equal to *n,* each waveguide element being configured to guide at least one of said *n* different monochromatic light image beams to out-coupling diffractive means arranged within the waveguide element, the out-coupling diffractive means being configured to deliver at least one part of the guided beams toward the eye box.

According to the general principle of the proposed technique, the optical device is further characterized in that the *n* different monochromatic light image beams are in a same polarization mode when guided within their respective waveguide elements, said polarization mode being one among a transverse electric mode and a transverse magnetic mode; and in that said optical device further comprises at least one polarizer configured to filter said polarization mode from external light beams incident on said optical device, before said external light beams reach at least one of said out-coupling diffractive means.

In that way, the monochromatic light image beams and the external light beams reaching the out-coupling diffractive means of a given waveguide element are in different polarization modes. The out-coupling diffractive means may then be configured to diffract only the polarization mode of the guided monochromatic light image beams, so that the external light beams that reach the out-coupling diffractive means after passing through the polarizer are not diffracted toward the eyes of the user. Such a new design of augmented reality device thus allows limiting the amount of undesirable stray light that may compromise the user experience.

According to an embodiment, said at least one polarizer belongs to the group comprising reflective polarizers and absorptive polarizers.

According to an embodiment, said at least one polarizer is a wire-grid polarizer.

According to a particular feature of this embodiment, the optical device is designed so that the parallel wires of such wire-grid polarizer and the grating line structures of the out-coupling diffractive means are substantially perpendicular to ground earth normal, when the optical device is worn by a user standing straight.

According to an embodiment, the number *m* of waveguide elements is equal to one, and said at least one polarizer is arranged on an outer face of the waveguide element, with respect to the position of the eye box.

According to another embodiment, the number *m* of waveguide elements is greater or equal to two, and the m waveguide elements are stacked on each other.

According to a particular feature of this embodiment, said at least one polarizer is arranged on an outer face of the waveguide element being further away from the eye box. According to another embodiment, the number *n* of monochromatic light image beams generated by the light engine and the number *m* of waveguide elements are both equal to three, and a first waveguide element is associated with a blue color, a second waveguide element is associated with a green color, and a third waveguide element is associated with a red color.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is assumed that it is within the knowledge of one skilled in the art to affect such feature, structure, or characteristic in connection with other embodiments whether or not explicitly described.

### 4. Brief description of the drawings

Embodiments of the present disclosure can be better understood with reference to the following description and drawings, given by way of example and not limiting the scope of protection, and in which:
- **Figure 1a** and **1b****,** already described in relation with prior art, shows classic situations where some stray light may reach the eyes of a user wearing an augmented reality device and compromise its user experience;
- **Figure 2** illustrates how an optical device of prior art generates undesirable stray light;
- **Figure 3a** shows how a polarizer may be used to limit stray light according to an embodiment of the present disclosure;
- **Figures 3b** illustrate how a polarizer may be used to limit stray light according to another embodiment of the present disclosure.

The components in the figures are not necessarily to scale, emphasis instead being placed upon illustrating the principles of the disclosure.

### 5. Detailed description

The present disclosure relates to a new technical solution that allows limiting unwanted diffracted stray light directed toward the eyes of a user wearing an augmented reality device, for example augmented reality glasses. As previously explained, such stray light is indeed undesirable, since it is likely to create visual discomfort and thus compromise the quality of the user experience.

As it will be described more fully hereafter with reference to the accompanying figures, and according to different embodiments of the disclosure, some particular implementations of an augmented reality device are proposed so as to prevent the generation of stray light at the out-coupling diffractive means embedded in the device.

This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the scope of the disclosure as defined by the claims. In the drawings, like or similar elements are designated with identical reference signs throughout the several views thereof.

It will also be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

While not explicitly described, the present embodiments and variants may be employed in any combination or sub-combination.

The proposed technique is more particularly intended to be implemented in an optical device using polychromatic waveguide elements to guide a computer-generated image to an area positioned in front of an eye of a user wearing said optical device, usually referred to as an eye box. An example of such an optical device as existing in the prior art is partially illustrated in relation with **figure 2****.** In the illustrated implementation, a light engine (not represented) is used to generate light beams comprising three different monochromatic light image beams whose combination corresponds to a virtual image: blue color image beams, green color image beams, and red color image beams. The optical device also comprises three waveguide elements WG1, WG2, WG3, each waveguide element being configured to guide a different one of said different monochromatic light image beams to out-coupling diffractive means arranged within the waveguide element, by total internal reflection. For example, waveguide element WG1 is configured to guide at least a part of blue color image beams to out-coupling diffractive means OM1, waveguide element WG2 is configured to guide at least a part of green color image beams to out-coupling diffractive means OM2, and waveguide element WG3 is configured to guide at least a part of red color image beams to out-coupling diffractive means OM3. The different monochromatic light image beams are generated and injected within their respective waveguide elements in an injection zone IZ. To this end, the injection zone IZ (whose structure is not detailed on figure 2) may comprise injection means, such as, for example, in-coupling diffractive means taking the form of diffractive gratings. At the other end of the waveguide elements (WG1, WG2, WG3), the out-coupling diffractive means (OM1, OM2, OM3) are configured to deliver at least one part of the guided beams toward the eye box (EB), so that the virtual image generated by the light engine reaches an eye of the user wearing the optical device. Each out-coupling diffractive means (OM1, OM2, OM3) takes the form of a diffraction grating comprising straight periodic structures extending all in same direction (referred to as the grating orientation), usually a vertical or a horizontal direction, depending on the general design of the optical device and notably on the position of the light engine. As previously discussed, one drawback with such an existing optical device is that the out-coupling diffractive means are likely to cause unwanted diffraction from real world light sources. For example, some stray light beams SL1, SL2 and SL3 - resulting from diffraction phenomenon of external light beams EL occurring respectively on out-coupling diffractive means OM1, OM2 and OM3 - may be directed toward the eye box, i.e. toward the eye of the user. Throughout the disclosure, "external light beams" must be understood as light beams that are not coming from the light engine of the optical device, but from other light sources independent from the optical device.

According to present disclosure, it is proposed to modify such an optical device of the prior art so as to prevent or at least limit the generation of unwanted diffracted stray light directed towards the eyes of the user. The general principle of the proposed technique relies on the combination of two main characteristics:
- using a same polarization mode - among a transverse electric mode and a transverse magnetic mode - for all the different monochromatic light image beams, when they are guided within their respective waveguide elements ; and
- using at least one polarizer within the optical device, to filter said polarization mode from external light beams incident on said optical device, before said external light beams reach at least one of the out-coupling diffractive means.

In that way, the monochromatic light image beams and the external light beams reaching the out-coupling diffractive means of a given waveguide element are in different polarization modes. According to an embodiment of the disclosure, the polarizers used to polarize external light beams belong to the group comprising reflective polarizers (including wire-grid polarizers, i.e. one of the simplest linear polarizers, consisting of many fine parallel wires placed in a plane) and absorptive polarizers. The out-coupling diffractive means may then be configured so as to diffract only the polarization mode of the guided monochromatic light image beams, so that the external light beams that reach the out-coupling diffractive means after passing through the polarizer are not diffracted toward the eyes of the user. This may be done, for example, by polarizing the external light along the same direction than the grating line structures of out-coupling diffractive means. For example, a wire-grid polarizer whose wires have the same direction than the one of the grating line structures of the out-coupling diffractive means may be used to polarize the external light: the out-of plane polarization of the external light is then reflected away by wire-grid polarizer and the external light hits the out-coupling diffractive means with an in-plane polarization. Hence, the external light is going through the out-coupling diffractive means un-diffracted, as if there were no out-coupling diffractive means within the waveguide element, and no stray light is generated toward the eye of the user.

Ensuring that the different monochromatic light image beams all have the same polarization mode when guided within their respective waveguide elements may be implemented in several ways, which are not detailed in the present disclosure. As an illustrative and non-limitative example, the light engine may be configured so that all the generated monochromatic light beams are already polarized in the same desired polarization mode before being injected within their respective waveguide elements. Specific implementations of the injecting zone may also be used for injecting a monochromatic light beams having the expected polarization in its corresponding waveguide element, notably when the light beams forming the virtual image are generated by a single light engine and initially directed along a direction normal to the guiding direction of a stack of waveguide elements. Such specific implementations may involve a light engine able to output a succession of different polarizations, and particular arrangement of in-coupling diffractive means (optimized for given wavelengths and polarization of generated monochromatic light image beams) and half-wave plates (appropriately located for modifying polarization mode of the beams passing through the injection zone, so as to control the part of the generated beams to be injected in a next waveguide element). Throughout the rest of the disclosure, the polarization mode which is associated with all the different monochromatic light image beams when they are guided within their respective waveguide elements is referred to as the "guiding polarization mode".

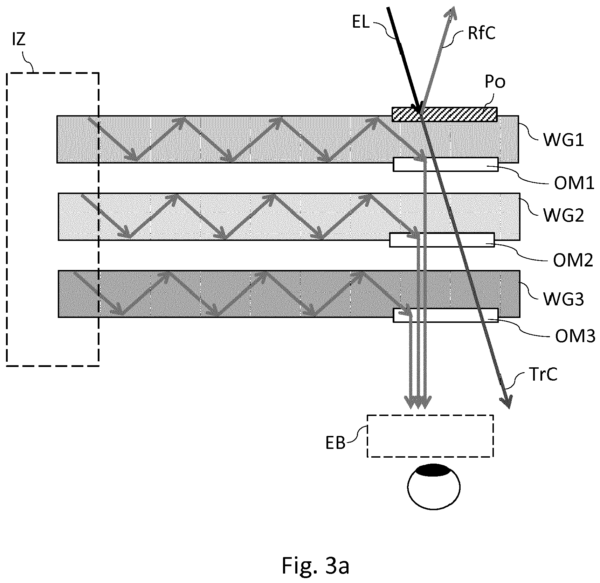

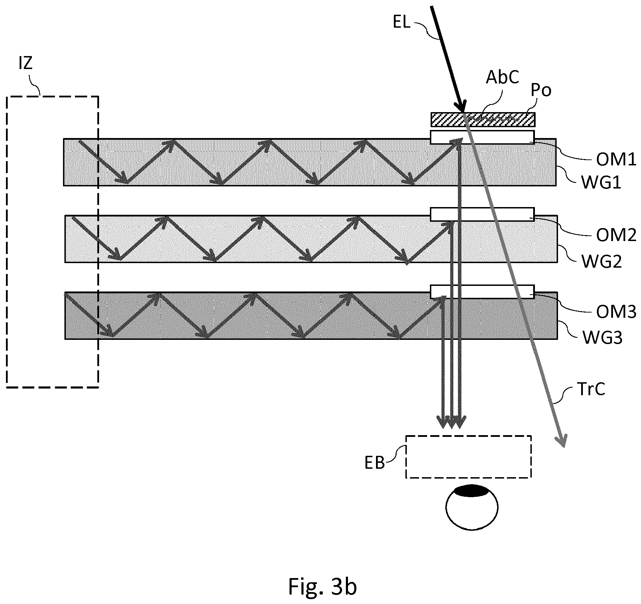

Different embodiments of an optical device according to the proposed technique are now presented, in relation with figures 3a and 3b. For the sake of simplicity, the optical devices schematically illustrated on figures 3a and 3b have a general structure close to the one already described in relation with figure 2, i.e. the optical device comprises a light engine configured to generate three different monochromatic light image beams (blue, green, red) whose combination corresponds to the virtual image to provide to the user, and three waveguide elements (WG1, WG2, WG3), each configured to guide a different one of said three different monochromatic light image beams. However, it is to be understood that the disclosure is not limited to the illustrated implementations. In particular, in a broader case, the light engine is able to generate *n* different monochromatic light image beams whose combination corresponds to the virtual image, with *n* being an integer greater or equal to one, and the optical device comprises *m* waveguide elements, m being an integer greater or equal to one and lower or equal to *n.* Each waveguide element is then configured to guide at least one of said *n* different monochromatic light image beams to out-coupling diffractive means arranged within the waveguide element, by total internal reflection. When the number of different monochromatic light image beams generated by the light engine is equal to the number of waveguide elements (*n*=*m*), each waveguide element is configured to guide a different one of said different monochromatic light image beams. A waveguide element may also be configured to guide more than one of the different monochromatic light image beams, if the number of different monochromatic light image beams generated by the light engine is higher than the number of waveguide elements (*m*≤*n*). For example, an optical device according to the proposed technique may comprise a light engine (or a plurality of light engines) able to generate five different monochromatic light image beams - e.g. respectively associated with colors C1, C2, C3, C4 and C5 - but only two waveguide elements: e.g. a first waveguide element for guiding both C1 and C2 monochromatic light image beams and a second waveguide element for guiding C3, C4 and C5 monochromatic light image beams.

When the optical device comprises a plurality of waveguide elements (i.e. *m* ≥ 2), the waveguide elements may notably be stacked on each other, as illustrated in the figures. Throughout the rest of the disclosure, it is assumed that an inner face and an outer face of each waveguide element are defined with respect to the position of the eye box. More particularly, for a given waveguide element, the outer face is defined as the face being further away from the eye box, and the inner face is defined as the opposite face, i.e. the face closer to the eye box.

**Figure 3a** illustrates an embodiment of the disclosure where a reflective polarizer Po is associated with the whole stack of waveguide elements comprising WG1, WG2 and WG3. The polarizer Po is then arranged on the outer face of the waveguide element that is further away from the eye box EB, i.e. on the outer face of WG1. In that way, as shown on figure 3a, the polarizer Po is ideally located to process at least one part of the external light beams EL incident on the optical device before they reach at least one of the out-coupling diffractive means OM1, OM2 and/or OM3. For example, if the guiding polarization mode is the transverse electric mode (i.e. the beams guided in the different waveguide elements WG1, WG2 and WG3 are all in a transverse electric mode), the polarizer Po is configured to filter the transverse electric mode from external light beams EL, and out-coupling diffractive means OM1, OM2 and OM3 are also configured to diffract only the transverse electric mode. As illustrated on figure 3a, the reflective polarizer Po transmits transverse magnetic component TrC of the external light EL, but reflects the transverse electric component RfC. In that way, the external light beams that reach the out-coupling diffractive means OM1, OM2 and OM3 are polarized in a transverse magnetic mode, and they are thus not diffracted by these out-coupling diffractive means. This allows reducing significantly the amount of stray light that is likely to be directed toward the user eyes. Having a single polarizer associated with the whole stack of waveguide elements is of interest, since it causes only minimal complication of the manufacturing process of the optical device. In particular, if the reflective polarizer Po is a wire-grid polarizer it can be directly and easily fabricated on the outer face of the waveguide element that is further away from the eye box. Additionally, a wire-grid polarizer is broadband and very robust to angle of incident regarding the polarization purity transmitted.

Of course, example of figure 3a is only illustrative, and an optical device according to the proposed technique may be implemented in other ways, as shown for example in relation with **figure 3b****.** In this embodiment, the guiding polarization mode is the transverse magnetic mode (i.e. the beams guided in the different waveguide elements WG1, WG2 and WG3 are all in a transverse magnetic mode), and the polarizer Po is thus configured to filter the transverse magnetic mode from external light beams EL. The out-coupling diffractive means are also configured to diffract only the guiding polarization mode, i.e. the transverse magnetic mode. In the example of figure 3b, polarizer Po is this time an absorptive polarizer, which transmits transverse electric component TrC of the external light EL, but absorbs the transverse magnetic component AbC. Of course, a reflective polarizer transmitting the transverse electric component and reflecting the transverse magnetic component of the external light could also have been used in the context of figure 3b. The external light beams that reach the out-coupling diffractive means OM1, OM2 and OM3 are polarized in a transverse electric mode, and they are thus not diffracted by these out-coupling diffractive means. Here again, the objective of reducing significantly the amount of stray light that is likely to be directed toward the user eyes is achieved.

Whereas the out-coupling diffractive means were arranged on the inner faces of the waveguide elements in the example of figure 3a, they are now arranged on the outer faces of the waveguide elements in the example of figure 3b. In such a case, the polarizer configured to filter the guiding polarization mode may be implemented directly over the out-coupling diffractive means of the waveguide element being further away from the eye box, as shown on figure 3b with polarizer Po being implemented directly on out-coupling diffractive means OM1, with possibly the use of spacer means. Of course, the positions of the polarizer are not limited to the ones described in the figures, and other positions may be implemented without departing from the scope of the disclosure.

According to an embodiment of the disclosure, when a wire-grid polarizer is used to filter the guiding polarization mode from external light beams incident on the optical device, the optical device may be designed so that the parallel wires of the wire-grid polarizer and the grating line structures of the out-coupling diffractive means are oriented so as to be substantially perpendicular to ground earth normal, when the optical device is worn by a user standing straight. Indeed, if it is assumed that the optical device is intended to be used by a user standing straight in normal use, such implementation makes it possible to filter bright light coming from the above (frequently-met situation illustrated in relation with figure 1a), thus allowing preventing all type of ceiling luminaires indoors or the sun outdoors to generate a huge amount of stray light.

In addition to the effect of reducing the amount of stray light likely to be directed towards the user eyes, the technique proposed in the present disclosure offers other advantages. For example, a polarizer according to the disclosure also serves as a real-world view attenuator. Indeed, because the real-world view is generally much brighter than the virtual image, particularly outdoors, an augmented reality device usually comprises means for attenuating the luminosity of the real view seen through the see-through waveguide elements, so as to enhance the contrast of the virtual image. To this end, a grey filter that attenuates the light from the real-world view is usually used in prior art devices. Thanks to the proposed technique, such a grey filter is not needed anymore, since the attenuation of the real-world image is performed by at least one of the polarizers disclosed. For example, a wire-grid polarizer placed on top of the stack of waveguide elements reflects away more than fifty per cent of external light. Besides, the use of such top polarizer allows separating physically two optical paths: the virtual image and the real-world view are then in different polarization mode which makes a specific processing on one of them easier to achieve afterwards.

## Claims

1. An optical device for delivering an image to an eye box (EB) being an area positioned in front of an eye of a user wearing said optical device, the optical device comprising:
a light-engine for delivering said image, said light engine being able to generate *n* different monochromatic light image beams, whose combination corresponds to said image, *n* being an integer greater or equal to one;
*m* waveguide elements (WG1, WG2, WG3), *m* being an integer greater or equal to one and lower or equal to *n,* each waveguide element being configured to guide at least one of said *n* different monochromatic light image beams to out-coupling diffractive means arranged within the waveguide element, the out-coupling diffractive means (OM1, OM2, OM3) being configured to deliver at least one part of the guided beams toward the eye box (EB);
**wherein** the *n* different monochromatic light image beams are in a same polarization mode when guided within their respective waveguide elements, said polarization mode being one among a transverse electric mode and a transverse magnetic mode;
**and wherein** said optical device further comprises at least one polarizer (Po) configured to filter said polarization mode from external light beams (EL) incident on said optical device, before said external light beams reach at least one of said out-coupling diffractive means (OM1, OM2, OM3).

2. The optical device according to claim 1, **wherein** said at least one polarizer belongs to the group comprising reflective polarizers and absorptive polarizers.

3. The optical device according to claims 1 or 2, **wherein** said at least one polarizer is a wire-grid polarizer.

4. The optical device according to claim 3, **wherein** parallel wires of the wire-grid polarizer and grating line structures of the out-coupling diffractive means are substantially perpendicular to ground earth normal, when the optical device is worn by a user standing straight.

5. The optical device according to anyone of claims 1 to 4, **wherein** *m* is equal to one, and wherein said at least one polarizer is arranged on an outer face of the waveguide element, with respect to the position of the eye box.

6. The optical device according to anyone of claims 1 to 4, **wherein** *m* is greater or equal to two, and wherein the *m* waveguide elements are stacked on each other.

7. The optical device according to claim 6, **wherein** said at least one polarizer is arranged on an outer face of the waveguide element being further away from the eye box.

8. The optical device according to claims 6 or 7, **wherein** *n* and *m* are equal to three, and wherein a first waveguide element is associated with a blue color, a second waveguide element is associated with a green color, and a third waveguide element is associated with a red color.
